# EUROPÄISCHE PATENTSCHRIFT

(11) **EP 0 856 243 B1**
(45) Veröffentlichungstag und Bekanntmachung des Hinweises auf die Patenterteilung: **13.11.2002**
(21) Anmeldenummer: 98101532.4
(22) Anmeldetag: 29.01.1998
(51) Int. Cl.: A01C 23/00

(54) **Gülle-Austragsvorrichtung**
Slurry spreader
Epandeur de lisier

(30) Priorität: 29.01.1997 DE 19703183; 09.04.1997 DE 19714535; 23.10.1997 DE 29718897 U
(43) Veröffentlichungstag der Anmeldung: 05.08.1998
(73) Patentinhaber: Landmaschinen Wienhoff GmbH, 49844 Bawinkel (DE)
(72) Erfinder: Wienhoff, Helmut, 49844 Bawinkel (DE); Hinken, Franz, 49808 Lingen (DE)
(74) Vertreter: Wurm, Maria Bernadette, Dr.

(56) Entgegenhaltungen:
- WO-A-95/05067
- AT-B- 389 794
- DE-U- 29 601 934
- DE-U- 29 604 084

## Beschreibung

Die Erfindung betrifft eine Gülle-Austragsvorrichtung für ein Gülle-Streufahrzeug mit einem zylindrischen Gehäuse, an dem mindestens eine Austragsöffnung angeordnet ist, und mit einem Zulauf für Gülle, der mit einer Zulaufleitung verbindbar ist, die an die Gülle-Austragsvorrichtung an einen Gülle-Vorratsbehälter angeschlossen ist.

Gülle fällt, insbesondere bei Betrieben mit Massentierhaltung, in großen Mengen an und muß mit möglichst geringem Aufwand gehandhabt werden. Es ist in den meisten landwirtschaftlichen Betrieben üblich, die Gülle als Dünger einzusetzen und auf Äckern oder Wiesen auszustreuen. Die Gülle-Streufahrzeuge werden an den Ställen mit der Gülle befüllt, die neben flüssigen Bestandteilen auch Feststoffe unterschiedlicher Größe enthält. Bei diesen Feststoffen handelt es sich um Steine, die durch die Tiere in die Ställe eingetragen werden, aber auch um nicht zerkleinertes organisches Material wie Streu oder Federn und ähnliches. Das stückige Material verstopft beim Austragen Förderleitungen für die Gülle und Austragsvorrichtungen, beschädigt sie zum Teil und ist damit die häufigste Ursache für Betriebsstörungen.

Aus der gattungsbildenden deutschen Gebrauchsmuster-Schrift 295 17 792 ist eine Gülle-Austragsvorrichtung bekannt, bei der in einem zylindrischen Gehäuse eine Förderschnecke angeordnet ist, die die Gülle zu Austragsöffnungen fördert. Die Gülle wird dem zylindrischen Gehäuse über mehrere Zuleitungen zugeführt, die an verschiedenen Stellen mit entsprechenden Öffnungen in der Gehäusewand verbunden sind. Von den Zuführöffnungen wird die Gülle dann mittels der Förderschnecke zu den Austragsöffnungen gefördert. Grobstoffe werden zum Ende des zylindrischen Gehäuses gefördert.

Diese Austragsvorrichtung ist mit zahlreichen Nachteilen behaftet. Die Zuführung der Gülle ist aufwendig, weil lange Schlauchleitungen erforderlich sind, um die Gülle von einem Vorratsbehälter zu den verschiedenen Zuführöffnungen des Verteilers zu transportieren. Die zahlreichen Zuführöffnungen weisen einen verhältnismäßig großen Durchmesser auf, weil Gülle und Grobstoff zugeführt werden. Diese großen Öffnungen in der Gehäusewand schwächen die Festigkeit des Gehäuses, wobei zu bedenken ist, daß es sich um bis zu ca. 8 m lange Gehäuse handelt, die im Betriebszustand, das heißt, beim Austragen der Gülle, durch das Fahren auf dem Acker starken Schwingungen ausgesetzt sind. Die massiv aus Edelstahl geformte Förderschnecke ist zudem verhältnismäßig schwer. Das Fördern der Gülle erfordert einen hohen Energieaufwand, weil große Massen zu bewegen und hohe Reibungskräfte zu überwinden sind.

Es ist daher Aufgabe der Erfindung, eine Gülle-Austragsvorrichtung vorzuschlagen, die einfach und mit niedrigen Kosten hergestellt ist und die mit geringem Energieaufwand zuverlässig funktioniert.

Die vorstehende Aufgabe wird gelöst durch eine Gülle-Austragsvorrichtung mit den Merkmalen des Oberbegriffs, bei der der Zulauf für Gülle an einem ersten Ende des zylindrischen Gehäuses angeordnet ist, und bei der in dem zylindrischen Gehäuse eine einseitig gehaltene, im Betriebszustand rotierende Spirale angeordnet ist, wobei die Spirale auf einer Antriebswelle befestigt ist, die an dem ersten oder einem zweiten Ende des zylindrischen Gehäuses angeordnet ist. Diese neuerungsgemäße Gülle-Austragsvorrichtung bietet zahlreiche Vorteile, insbesondere erlaubt sie eine besonders stabile Ausführung der Austragsvorrichtung, weil es nun nicht mehr erforderlich ist, Öffnungen für das Zuführen von Gülle in der Gehäusewand vorzusehen. Die Austragsvorrichtung weist ein geringer Gewicht auf, da die Spirale mit weitaus niedrigerem Materialeinsatz gefertigt wird. Gemäß einer bevorzugten Ausführungsform sind die Flanken bei einer Materialstärke von ca. 2 bis 5 mm nur ca. 5 bis 15 mm breit.

Das Einsetzen einer Spirale an Stelle der Förderschnecke bringt es mit sich, daß selbst bei Gehäusen von mehreren Metern Länge das Einleiten von Gülle an einem ersten Ende, vorzugsweise an einer ersten Stirnfläche des Gehäuses möglich ist, bei gleichzeitig gleichmäßigem Austrag von Gülle, auch an den von der Zuleitung weit entfernt angeordneten Austragsöffnungen. Die Spirale läßt die Querschnittsfläche des Gehäuses im wesentlichen frei. Deshalb genügt der verhältnismäßig geringe Überdruck, mit dem die Gülle über die Zuleitung eingetragen wird, um sie in dem freien Raum, der von den Flanken der Spirale umgrenzt wird, weiterströmen zu lassen. Selbst Grobstoff wird durch den Überdruck weit in das zylindrische Gehäuse hineingefördert, ohne daß zusätzliche Energie für das Fördern erforderlich ist. Die Spirale genügt also völlig, um, insbesondere an den von dem Zulauf entfernteren Abschnitten des Gehäuses, Grobstoff weiterzufördern, damit dieser sich nicht absetzt und Austragsöffnungen verstopft.

Das Herstellen einer Spirale erfordert weitaus weniger Material als das Anfertigen einer Förderschnecke. Die Fertigung einer Förderschnecke ist aufwendig und teuer. Eine Förderschnecke ist schwer und belastet deshalb die Verteilerarme, an denen die Austragsvorrichtung befestigt ist.

Eine Förderschnecke bewegt die zu verteilende Gülle zwischen ihren Flanken in verhältnismäßig kleinen Kammern; ein freies Strömen der Gülle wird völlig unterbunden. Durch das Fördern in kleinen Kammern kommt es häufig zum Festsetzen von Grobstoff zwischen Förderschnecke und Gehäuse. Diese Blockaden müssen mit erhöhtem Energieaufwand beseitigt werden. Falls die Förderschnecke völlig blockiert, muß sogar die Schnecke ausgebaut werden, was mit erheblichem Aufwand verbunden ist. Die Spirale bietet dagegen den Vorteil, daß ausreichend Raum verfügbar ist, so daß der Grobstoff weitaus weniger dazu neigt, sich festzusetzen.

Überdies wird die Spirale, gemäß einer besonders bevorzugten Ausführungsform aus Federstahl gefertigt. Sie ist deshalb besonders preiswert, aber vor allem auch besonders elastisch. Edelstahl ist ein gegen chemische Einflüsse widerstandsfähiges Material, das aber bei mechanischer Beanspruchung nur geringe Standzeiten bietet. Eine Schnecke aus Edelstahl zeigt deshalb wegen der steten Reibung am Gehäuse sowie an Steinen und dergleichen, die mit der Gülle eingetragen werden, bereits nach kurzer Zeit starke Abnutzungserscheinungen. Die Flanken der Schnecke können dabei so stark beschädigt werden, daß die gesamte Schnecke -und damit das teuerste Bauteil der Austragsvorrichtung- ausgetauscht werden muß. Eine Spirale aus Federstahl dagegen ist aufgrund der Materialeigenschaften und der Formgebung gegen die hier vorherrschenden mechanischen Belastungen weitaus unempfindlicher. Doch selbst wenn ein Austausch erforderlich sein sollte, so ist die Spirale das preiswerteste Bauteil der Austragsvorrichtung.

Weiterhin ist von Vorteil, daß festgesetzter Grobstoff sich mittels einer Spirale aus Federstahl mit geringerem Energieeinsatz lösen läßt, zum einen wegen der Federkraft der Spirale, zum anderen, weil frei nachströmende Gülle das Lösen von Grobstoff unterstützt. Nach einer vorteilhaften Weiterbildung der Neuerung wird der Grobstoff, zumindest in den vom Zulauf entfernteren Abschnitten des Gehäuses, von der Spirale gefördert und sammelt sich schließlich in einem Grobstoff-Sammelbehälter. Der Grobstoff-Sammelbehälter kann zum Beispiel durch einen Schieber einfach geöffnet, entleert und wieder verschlossen werden.

Im Gegensatz zu einer Förderschnecke, die aufwendige Lagerung an beiden Enden erfordert, genügt es, wenn die Spirale einseitig gehalten wird. Es ist ohne weiteres möglich, die Antriebswelle der Spirale und den Zulauf an demselben Ende des Gehäuses anzuordnen. Es ist aber genausogut möglich, den Zulauf an dem ersten Ende des Gehäuses anzuordnen und die Antriebswelle mit dem zugehörigen Motor an dem zweiten Ende des Gehäuses anzubringen.

Es wird bevorzugt, wenn an der mindestens einen Austragsöffnung eine Ablaufleitung, üblicherweise ein Schlauch, angeschlossen ist, durch den die Gülle bis in Bodennähe geführt wird, ohne daß es zu größeren Geruchsbelästigungen kommt.

Für besondere Anwendungsfälle kann zum verbesserten Abscheiden von Grobstoff zwischen Zulauföffnung und Ablauföffnung der Gülle-Austragsvorrichtung ein Sieb eingesetzt werden, wobei die Spirale auf der Zulauf-Seite des Siebes angeordnet ist. Das Sieb ist zweckmäßigerweise zylindrisch ausgebildet und, je nach Ausführungsform, entweder innerhalb der Spirale angeordnet oder zwischen Spirale und Gehäuse. Das Sieb erstreckt sich im wesentlichen über die gleiche Länge wie die Spirale. Es ist so zu bemessen, daß auf der Zulaufseite genügend Raum zum Abführen des Grobstoffs zum Grobstoff-Sammelbehälter vorhanden ist. Die Öffnungen des Siebes sind so bemessen, daß Grobstoff nicht durch diese Öffnungen hindurchgelangt sondern auf der Zulaufseite verbleibt und zum Grobstoff-Sammelbehälter gefördert wird.

Gemäß einer vorteilhaften Weiterbildung der Erfindung wird, insbesondere bei langen Gehäusen, die Spirale an beiden Enden des Gehäuses gehalten. An einem Ende des Gehäuses ist die Antriebsvorrichtung für die Spirale angeordnet, am gegenüberliegenden Ende genügt eine einfache Aufnahme ohne Antrieb.

Es wird besonders bevorzugt, wenn die Gülle-Austragsvorrichtung klein dimensioniert wird. Die Austragsvorrichtung wird durch geringeren Materialverbrauch preiswerter, leichter und einfacher handhabbar. Die Gewichtsreduzierung ist besonders vorteilhaft, weil die Austragsvorrichtungen die Verteilerarme, an denen sie angebracht sind, besonders belasten. Ein zylindrisches Gehäuse mit einer Länge zwischen 10 und 100 cm, vorzugsweise zwischen 30 und 50 cm ermöglicht eine besonders gleichmäßige Verteilung der auszutragenden Gülle, da der Druckverlust auf der Strecke von der ersten bis zur letzten Austragsöffnung minimal ist.

Anhand der nachfolgenden Figuren werden vorteilhafte Ausführungsbeispiele der Erfindung im Detail erläutert. Es zeigen:
- Fig. 1: einen Längsschnitt durch eine Gülle-Austragsvorrichtung
- Fig. 2: einen Längsschnitt durch eine zweite Ausführungsform der Gülle-Austragsvorrichtung

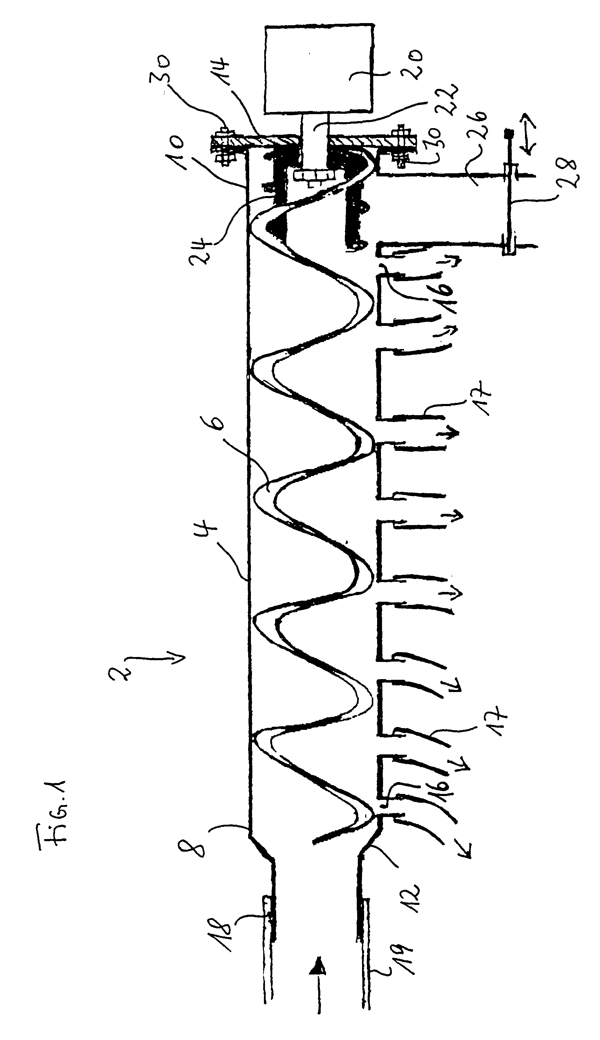

Die Fig. 1 zeigt eine Gülle-Austragsvorrichtung 2, bei der ein langgestrecktes, zylindrisches Gehäuse 4 eine Spirale 6 aufnimmt. Das Gehäuse 4 ist aus Metall, vorzugsweise Edelstahl hergestellt. Es ist ca. 4 m lang und weist einen Außendurchmesser von ca. 200 mm auf. Es ist an einem -hier nicht dargestellten- Verteilerarm eines Gülle-Streufahrzeugs befestigt. Das Gehäuse 4 hat ein erstes Ende 8 und ein zweites Ende 10. Die Enden 8, 10 erstrecken sich im wesentlichen jeweils von den ersten und zweiten Stirnflächen 12 und 14 bis zu den nächstliegenden Austragsöffnungen 16.

Der Zulauf 18 ist am ersten Ende 8 des Gehäuses 4 angeordnet. Er mündet in der Stirnfläche 12 und ist verbunden mit einer Zulaufleitung 19, die an den Gülle-Vorratsbehälter angeschlossen ist. Der Durchmesser des Zulaufs 18 ist nur geringfügig kleiner als der Durchmesser des Gehäuses 4. Die zuströmende Gülle kann also ungehindert in der Strömungsrichtung, die durch die Pfeile angedeutet ist, durch das Gehäuse 4 zu den Austragsöffnungen 16 strömen. An die Austragsöffnungen 16 schließen sich -hier nur schematisch dargestellte Ablaufleitungen 17 an, die sich in etwa bis zum Boden erstrecken.

In das Gehäuse 4 ist die Spirale 6 aus Federstahl eingesetzt. Die Spirale 6 ist an dem zweiten Ende 10 des Gehäuses 4 angebracht. Eine mit einem außerhalb des Gehäuses 4 angeordneten Motor 20 verbundene Welle 22 erstreckt sich durch die zweite Stirnfläche 14. Auf der Welle 22 ist im Gehäuse 4 eine Halterung 24 angebracht, an der die Spirale 6 befestigt ist. Bei eingeschaltetem Motor wird die Spirale in Drehung versetzt, so daß sie den Grobstoff, also die Bestandteile der Gülle, die so groß sind, daß sie nicht durch die Austragsöffnungen 16 hindurch ausgetragen werden, der sich im Gehäuse abgesetzt hat, zum zweiten Ende des Gehäuses fördert. Dort wird der Grobstoff in einem Grobstoff-Sammelbehälter 26 aufgefangen. Der Grobstoff-Sammelbehälter 26 ist mit einem Schieber 28 verschlossen. Durch Öffnen des Schiebers 28 wird der Grobstoff auf einfache Weise entfernt.

Das Beseitigen von Störungen, beispielsweise durch das Festsetzen von Grobstoff, erfolgt auf einfache Weise durch das Abnehmen der Stirnfläche bzw. -platte 14, die mit wenigen Schrauben oder Bolzen 30 am Gehäuse 4 befestigt ist. Dann werden Stirnfläche bzw. -platte 14, Motor 20, Welle 22, Halterung 24 und Spirale 6 miteinander aus dem Gehäuse 4 herausgezogen und nach Beseitigen der Störung wieder eingesetzt. Einfacher noch ist das Herausnehmen der Spirale im Falle von Störungen oder Reinigungsarbeiten, wenn die Spirale auf die Halterung 24 aufgeschraubt ist, so daß im Betriebszustand die Drehbewegung auf die Spirale 6 übertragen wird. Dann genügt es zum Herausnehmen der Spirale 6, das freie Ende des Gehäuses 4 zu öffnen und die Spirale 6 durch Drehen entgegengesetzt der Bewegung im Betriebszustand von der Halterung 24 zu lösen und aus dem Gehäuse 4 herauszuziehen. Halterung 24, Welle 22 und Motor 20 bleiben bei dieser Ausführungsform unverändert an ihrem Platz. Der Einbau erfolgt durch Einsetzen der Spirale 6 in das Gehäuse 4 und Aufdrehen der Spirale 6 auf die Halterung 24.

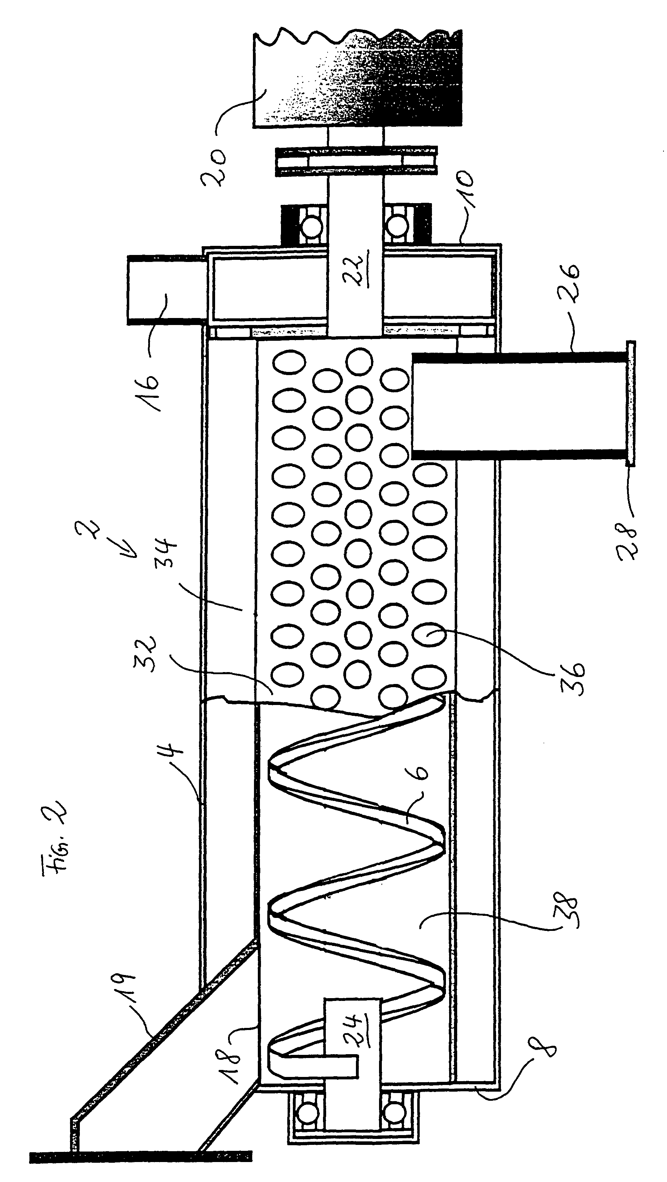

Fig. 2 zeigt eine Gülle-Austragsvorrichtung 2, die aus einem zylindrischen Gehäuse 4 aus Edelstahl besteht. In das Gehäuse 4 ist ein Sieb 32, ebenfalls aus Edelstahl eingesetzt. Das Gehäuse 4 ist ca. 50 cm lang und das Sieb 30 erstreckt sich über die gesamte Länge des Gehäuses. Das Gehäuse 4 hat einen Durchmesser von ca. 250 mm. Das Sieb 32 ist zentrisch in dem Gehäuse 4 der Gülle-Austragsvorrichtung 2 angeordnet und hat einen Durchmesser von ca. 150 mm. Zwischen dem Gehäuse 4 und dem Sieb 32 erstreckt sich ein kreisringförmiger Zwischenraum 34 von ca. 50 mm Breite. Das Sieb 32 hat zahlreiche, annähernd runde Öffnungen 36 von ca. 10 mm Durchmesser. Das Sieb 32 ist mit den Stirnseiten 8, 10 des Gehäuses 4 starr und abdichtend verbunden.

Ein zylindrischer Grobstoff-Sammelbehälter 26, ebenfalls aus Edelstahl, mündet in dem Sieb 32 und steht dadurch in Verbindung mit dem Innenraum 38 des Siebes. Der Sammelbehälter 26 erstreckt sich vom Sieb 32 durch den Zwischenraum 34 und das Gehäuse 4 und ragt über dieses hinaus. Der Sammelbehälter weist eine von außen zugängliche Öffnung auf, die durch einen Deckel 28 verschließbar ist. Das Volumen des Sammelbehälters beträgt ca. 31.

Die Gülle-Austragsvorrichtung 2 weist weiter eine Spirale 6 auf, die in den Innenraum 38 des Siebes 32 eingesetzt ist, und die sich über die gesamte Länge des Gehäuses 4 erstreckt. Die Spirale 6 ist drehbar. Im Betriebszustand rotiert sie und fördert dadurch Grobstoff zum Grobstoff-Sammelbehälter 26. Die Spirale 6 ist auf einer Welle 22 befestigt. Sie wird durch Rotation dieser Welle in Drehung versetzt. Die Spirale 6 ist an beiden Enden in einer Halterung 24 gelagert. Im übrigen weist die Gülle-Austragsvorrichtung wie die in Fig. 1 abgebildete Ausführungsform einen Zulauf 18 mit einer Zulaufleitung 19 auf, durch den die Gülle in den Innenraum 18 des Siebes 32 eingetragen wird. Nach Passieren des Siebes 32 wird die vom Grobstoff befreite Gülle dann, gegebenenfalls unterstütz durch eine Pumpe, vorzugsweise ein Flügelrad, zu Austragsöffnungen 16 gefördert.

## Patentansprüche

1. Gülle-Austragsvorrichtung für ein Gülle-Streufahrzeug mit einem Gehäuse (4), an dem mindestens eine Austragsöffnung (16) angeordnet und mit einem Zulauf (18) für Gülle, der mit einer Zulaufleitung (19) verbindbar ist, die an einen Gülle-Vorratsbehälter angeschlossen ist,
**dadurch gekennzeichnet, daß**
der Zulauf (18) für Gülle an einem ersten Ende (8) des Gehäuses (4) angeordnet ist, und daß in dem Gehäuse (4) eine einseitig oder beidseitig gehaltene, im Betriebszustand rotierende Spirale (6) angeordnet ist, wobei die Spirale (6) auf einer Antriebswelle (22, 24) befestigt ist, die an dem ersten (8) und/oder einem zweiten (10) Ende des Gehäuses (4) angeordnet ist.

2. Gülle-Austragsvorrichtung nach Anspruch 1, **dadurch gekennzeichnet, daß** die Spirale (6) sich im wesentlichen über die gesamte Länge des Gehäuses (4) erstreckt.

3. Gülle-Austragsvorrichtung nach Anspruch 1 oder 2, **dadurch gekennzeichnet, daß** die Spirale (6) aus Federstahl besteht.

4. Gülle-Austragsvorrichtung nach mindestens einem der vorangehenden Ansprüche, **dadurch gekennzeichnet, daß** das Gehäuse (4) zylindrisch ist.

5. Gülle-Austragsvorrichtung nach mindesten einem der vorangehenden Ansprüche, **dadurch gekennzeichnet, daß** in dem Gehäuse (4) zwischen Zulauf (18) und Austragsöffnung (16) ein Sieb (32) angeordnet ist, und daß die Spirale (6) zwischen dem Zulauf (18) und dem Sieb (32) angeordnet ist.

6. Gülle-Austragsvorrichtung nach mindestens einem der vorangehenden Ansprüche, **dadurch gekennzeichnet, daß** mindestens ein Sammelbehälter (26) für Grobstoff an dem Gehäuse (4) angebracht ist.

7. Gülle-Austragsvorrichtung nach mindestens einem der vorangehenden Ansprüche, **dadurch gekennzeichnet, daß** das Gehäuse (4) maximal 100 cm lang ist, und daß es eine Mehrzahl von Austragsöffnungen (16) aufweist.

8. Gülle-Austragsvorrichtung nach Anspruch 1, **dadurch gekennzeichnet, daß** der Zulauf (18) für Gülle sowie die Antriebswelle (22, 24) an dem ersten Ende (8) des Gehäuses(4), angeordnet sind.

9. Gülle-Austragsvorrichtung nach Anspruch 1, **dadurch gekennzeichnet, daß** der Zulauf (18) für Gülle an dem ersten Ende (8) des Gehäuses (4) angeordnet ist, und daß die Antriebswelle (22, 24) der Spirale (6) an dem zweiten Ende (10) des Gehäuses (4) angeordnet ist.

## Claims

1. A liquid manure discharge device for a liquid manure spreading vehicle having a housing (4) on which at least one discharge opening (16) is disposed and having an intake (18) for liquid manure, which is connectable with supply tubing (19) coupled to a liquid manure reservoir,
**characterized in that**
the intake (18) for liquid manure is disposed at a first end (8) of the housing (4) and **in that** a spiral (6) is disposed in the housing (4) held at one or both ends and rotating in operation, the spiral (6) being mounted on a drive shaft (22, 24) disposed at the first (8) and/or second (10) end of the housing (4).

2. A liquid manure discharge device according to claim 1, **characterized in that** the spiral (6) extends essentially over the entire length of the housing (4).

3. A liquid manure discharge device according to claim 1 or 2, **characterized in that** the spiral (6) is made of spring steel.

4. A liquid manure discharge device according to at least one of the preceding claims, **characterized in that** the housing (4) is cylindrical.

5. A liquid manure discharge device according to at least one of the preceding claims, **characterized in that** a sieve (32) is disposed in the housing (4) between the intake (18) and the discharge opening (16) and **in that** the spiral (6) is disposed between the intake (18) and the sieve (32).

6. A liquid manure discharge device according to at least one of the preceding claims, **characterized in that** at least one collecting receiver (26) for coarse matter is mounted on the housing (4).

7. A liquid manure discharge device according to at least one of the preceding claims, **characterized in that** the housing (4) has a maximum length of 100 cm and **in that** it comprises a plurality of discharge openings (16).

8. A liquid manure discharge device according to claim 1, **characterized in that** the intake (18) for liquid manure as well as the drive shaft (22, 24) are disposed at the first end (8) of the housing (4).

9. A liquid manure discharge device according to claim 1, **characterized in that** the intake (18) for liquid manure is disposed at the first end (8) of the housing (4) and the drive shaft (22, 24) of the spiral (6) is disposed at the second end (10) of the housing (4).

## Revendications

1. Dispositif de déversement de purin pour un véhicule épandeur de purin avec un bâti (4) sur lequel au moins une ouverture de déversement (16) est placée et avec une arrivée (18) pour le purin qui peut être reliée à une conduite d'arrivée (19) qui est connectée au réservoir de purin,
**caractérisé en ce**
**que** l'arrivée (18) pour le purin est placée à une première extrémité (8) du bâti (4) et qu'une spirale (6) maintenue sur un côté ou des deux côtés, rotative en état de marche, est placée dans le bâti (4), la spirale (6) étant fixée sur un arbre d'entraînement (22, 24) qui est placé à la première (6) et/ou à une seconde (10) extrémité du bâti (4).

2. Dispositif de déversement de purin selon la revendication 1, **caractérisé en ce que** la spirale (6) s'étend substantiellement sur toute la longueur du bâti (4).

3. Dispositif de déversement de purin selon la revendication 1 ou 2, **caractérisé en ce que** la spirale (6) est en acier inoxydable.

4. Dispositif de déversement de purin selon au moins l'une des revendications précédentes, **caractérisé en ce que** le bâti (4) est cylindrique.

5. Dispositif de déversement de purin selon au moins l'une des revendications précédentes, **caractérisé en ce qu'**un tamis (32) est placé dans le bâti (4) entre l'arrivée (18) et l'ouverture de déversement (16) et que la spirale (6) est placée entre l'arrivée (18) et le tamis (32).

6. Dispositif de déversement de purin selon au moins l'une des revendications précédentes, **caractérisé en ce qu'**au moins un réservoir collecteur (26) de matières grossières est monté sur le bâti (4).

7. Dispositif de déversement de purin selon au moins l'une des revendications précédentes, **caractérisé en ce que** le bâti (4) a une longueur maximale de 100 cm et qu'il présente une multitude d'ouvertures de déversement (16).

8. Dispositif de déversement de purin selon la revendication 1, **caractérisé en ce que** l'arrivée (18) de purin ainsi que l'arbre d'entraînement (22, 24) sont placés à la première extrémité (8) du bâti (4).

9. Dispositif de déversement de purin selon la revendication 1, **caractérisé en ce que** l'arrivée (18) de purin est placée à la première extrémité (8) du bâti (4) et que l'arbre d'entraînement (22, 24) de la spirale (6) est placé à la seconde extrémité (10) du bâti (4).
